# DEMANDE DE BREVET EUROPEEN

(11) **EP 3 747 522 A1**
(43) Date de publication de la demande: **09.12.2020**
(21) Numéro de dépôt: 20175150.0
(22) Date de dépôt: 18.05.2020
(51) Int. Cl.: B01D 3/02, B01D 3/00, B01D 5/00

(54) **DISPOSITIF DE DISTILLATION PRÉSENTANT UNE CONSOMMATION ÉNERGÉTIQUE RÉDUITE**

(30) Priorité: 06.06.2019 FR 1905981; 06.06.2019 FR 1905982
(71) Demandeur: Nov-Tech, 17520 Jarnac-Champagne (FR)
(72) Inventeur: TIZON, Philippe, 16100 Boutiers Saint-Trojan (FR); COIFFARD, Aurélien, 16300 Barret (FR); RABAGLIATO, Robin, 17500 Saint-Germain de Vibrac (FR)
(74) Mandataire: Fantin, Laurent

(57) **Abrégé**

L'invention a pour objet un dispositif de distillation qui comprend une chaudière (40) contenant un liquide à distiller (42) et générant des vapeurs d'alcool, un réfrigérant (52) contenant un premier fluide utilisé pour condenser les vapeurs d'alcool et refroidir les distillats, au moins un système de chauffe (44) utilisant un deuxième fluide caloporteur pour chauffer le liquide à distiller (42) ainsi qu'au moins un échangeur thermique (78) pour assurer des échanges thermiques entre le premier fluide caloporteur du système réfrigérant (52) et le deuxième fluide caloporteur du système de chauffe (44).

## Description

La présente demande se rapporte à un dispositif de distillation présentant une consommation énergétique réduite.

Selon un mode de réalisation visible sur la figure 1 ou dans le document FR2557990, un dispositif de distillation tel qu'un alambic charentais comprend une chaudière 10 configurée pour contenir un liquide à distiller, un brûleur à gaz 12 disposé sous la chaudière 10, un tour à feu 14 entourant la chaudière et configuré pour évacuer les gaz brûlés issus de la combustion vers un conduit d'évacuation 16, un chapiteau 18 surmontant la chaudière 10 au niveau duquel s'opèrent des phénomènes de condensation et de reflux, un col de cygne 20 collectant les vapeurs d'alcool sortant du chapiteau 18 et les acheminant vers un serpentin 22 positionné dans un système réfrigérant 24.

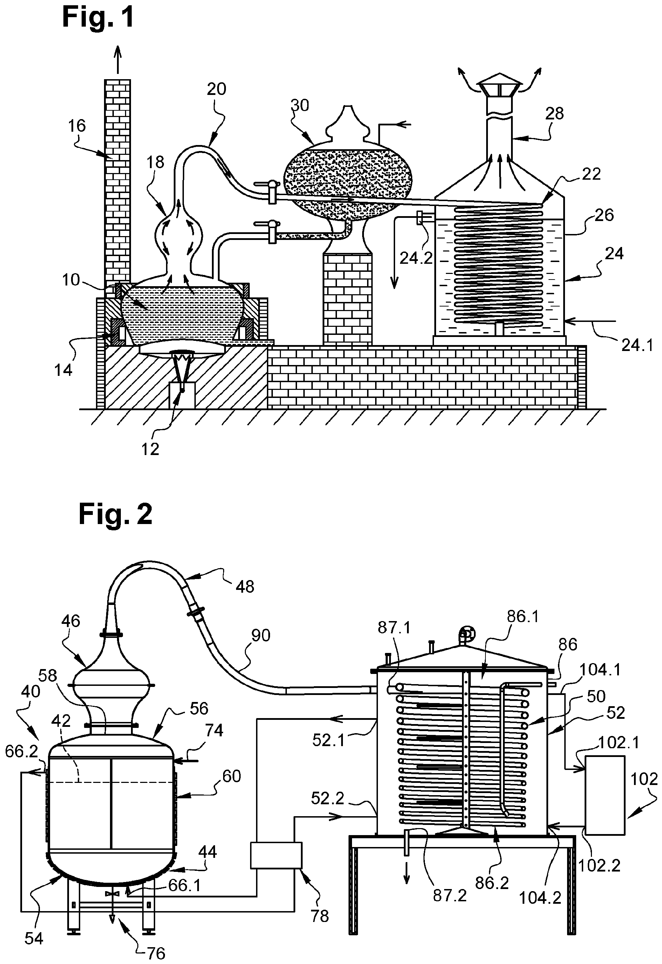

Le système réfrigérant 24 comprend un bac 26 contenant de l'eau dans laquelle le serpentin 22 est immergé. Les fluides s'écoulant de haut en bas dans le serpentin 22, le système réfrigérant 24 permet d'obtenir la condensation des vapeurs d'alcool dans la partie supérieure du serpentin 22 et le refroidissement des distillats dans la partie inférieure du serpentin 22. Comme illustré sur la figure 1, le système réfrigérant 24 comprend une alimentation en eau froide 24.1 en partie inférieure du système réfrigérant 24 et une sortie d'eau chaude 24.2 en partie supérieure du système réfrigérant 24. L'eau présente une température de l'ordre de 7 à 10 °C au niveau de l'alimentation en eau froide 24.1 et une température de l'ordre de 80 à 85°C au niveau de la sortie d'eau chaude 24.2. Le bac 26 du système réfrigérant 24 est ouvert en partie supérieure et surmonté d'une cheminée 28 pour évacuer les vapeurs d'eau.

Un système de refroidissement de l'eau (non représenté) est associé au réfrigérant pour permettre de réduire la température de l'eau à environ 8 ou 10°C.

Selon ce mode de réalisation, la distillation nécessite une quantité d'énergie importante pour assurer le fonctionnement du brûleur à gaz 12 afin de provoquer l'ébullition du liquide à distiller ainsi que le fonctionnement du système de refroidissement afin de refroidir l'eau du système réfrigérant 24.

Afin de réduire la quantité de chaleur et le temps nécessaires pour provoquer l'ébullition du liquide à distiller, le dispositif de distillation comprend également un réservoir à vin 30, également appelé réchauffe vin, traversé par le col de cygne 20 et permettant de réchauffer le liquide à distiller préalablement à son introduction dans la chaudière 10.

Pour améliorer le rendement énergétique, le document FR-3.033.026 décrit un brûleur à gaz amélioré. Pour augmenter les échanges entre la chaudière et les gaz brûlés, le document FR-3.033.025 propose un tour à feu 14 présentant au moins deux étages. Pour réduire les déperditions thermiques au niveau du tour à feu, le document FR-3.033.0227 décrit un tour à feu avec une isolation renforcée.

Malgré ces différentes améliorations, un dispositif de distillation consomme une quantité d'énergie importante pour porter à ébullition, distiller le liquide et pour refroidir l'eau du système réfrigérant.

La présente invention vise à remédier à tout ou partie des inconvénients de l'art antérieur.

A cet effet, l'invention a pour objet un dispositif de distillation comprenant une chaudière configurée pour contenir un liquide à distiller, au moins un système de chauffe configuré pour chauffer le liquide à distiller contenu dans la chaudière, un conduit de collecte configuré pour collecter des vapeurs d'alcool émanant de la chaudière, un système réfrigérant contenant un premier fluide caloporteur, un conduit de refroidissement relié au conduit de collecte et immergé dans le premier fluide caloporteur contenu dans le système réfrigérant ainsi qu'un système de refroidissement configuré pour refroidir le premier fluide caloporteur contenu dans le système réfrigérant.

Selon l'invention, le dispositif de distillation comprend au moins un système de chauffe utilisant un deuxième fluide caloporteur et au moins un échangeur thermique pour assurer des échanges thermiques entre le premier fluide caloporteur du système réfrigérant et le deuxième fluide caloporteur du système de chauffe.

Le dispositif de distillation selon l'invention permet de récupérer la chaleur latente, générée par la condensation des vapeurs d'alcool dans le système réfrigérant, qui était perdue dans les dispositifs de distillation de l'art antérieur et qui est utilisée pour chauffer le liquide à distiller contenu dans la chaudière selon l'invention.

Selon une autre caractéristique, l'échangeur thermique comprend une pompe à chaleur fonctionnant à très haute température.

Selon une autre caractéristique, le système réfrigérant comprend un réservoir fermé contenant le premier fluide caloporteur.

Selon une autre caractéristique, le réservoir comprend une cloison le scindant en une chambre supérieure positionnée au-dessus de la cloison et une chambre inférieure positionnée au-dessous de la cloison, ladite cloison étant traversée par le conduit de refroidissement.

Selon une autre caractéristique, la cloison est positionnée par rapport au conduit de refroidissement de sorte qu'un premier tronçon du conduit de refroidissement au niveau duquel se condensent les vapeurs d'alcool soit positionné au-dessus de la cloison et qu'un deuxième tronçon du conduit de refroidissement au niveau duquel des distillats sont refroidis soit positionné au-dessous de la cloison.

Selon une autre caractéristique, le réservoir comprend une sortie du premier fluide caloporteur reliée à l'échangeur thermique débouchant en partie supérieure de la chambre supérieure ainsi qu'un retour (du premier fluide caloporteur relié à l'échangeur thermique débouchant en partie inférieure de la chambre supérieure.

Selon une autre caractéristique, le réservoir comprend une sortie reliée au système de refroidissement débouchant en partie supérieure de la chambre inférieure et un retour relié au système de refroidissement débouchant en partie inférieure de la chambre inférieure.

Selon une autre caractéristique, le réservoir est calorifugé au moins au niveau de la chambre supérieure.

Selon une autre caractéristique, le conduit de collecte comprend un chapiteau surmontant la chaudière ainsi qu'un col de cygne reliant le chapiteau et le conduit de refroidissement, le chapiteau et/ou le col de cygne et/ou une partie supérieure de la chaudière étant calorifugés.

Selon une autre caractéristique, le chapiteau et/ou la partie supérieure de la chaudière et/ou le col de cygne sont thermorégulés.

Selon une autre caractéristique, le dispositif de distillation comprend des systèmes de chauffe de différentes natures.

Selon une autre caractéristique, le dispositif de distillation comprend un premier système de chauffe utilisant au moins le deuxième fluide caloporteur et un deuxième système de chauffe utilisant au moins un champ magnétique.

D'autres caractéristiques et avantages ressortiront de la description de l'invention qui va suivre, description donnée à titre d'exemple uniquement, en regard des dessins annexés parmi lesquels :
- la figure 1 est une représentation schématique d'un dispositif de distillation qui illustre un mode de réalisation de l'art antérieur,
- la figure 2 est une représentation schématique d'un dispositif de distillation qui illustre un mode de réalisation de l'invention,
- la figure 3 est une vue en perspective avec un détail d'une plaque bi-matériau utilisée pour fabriquer une chaudière qui illustre un mode de réalisation de l'invention,
- la figure 4 est une vue en perspective d'un fond d'une chaudière qui illustre un mode de réalisation de l'invention,
- la figure 5 est une coupe avec un détail d'un fond d'une chaudière qui illustre un mode de réalisation de l'invention
- la figure 6 est une coupe d'une partie d'une chaudière qui illustre un mode de réalisation de l'invention,
- la figure 7 est une coupe d'une partie chaudière qui illustre un autre mode de réa lisation,
- la figure 8 est une coupe d'une partie chaudière qui illustre un autre mode de réalisation,
- la figure 9 est une représentation schématique d'un dispositif de distillation comportant un échangeur thermique entre un système réfrigérant et une chaudière qui illustre un mode de réalisation de l'invention,
- la figure 10 est une représentation schématique d'un dispositif de distillation comportant un échangeur thermique entre un système réfrigérant et une chaudière qui illustre un autre mode de réalisation de l'invention,
- la figure 11 est une section transversale d'un col de cygne qui illustre un mode de réalisation de l'invention,
- la figure 12 est une coupe verticale d'un chapiteau qui illustre un mode de réalisation de l'invention,
- la figure 13 est une représentation schématique d'un système de refroidissement d'un fluide caloporteur d'un système réfrigérant qui illustre un mode de réalisation de l'invention.

Selon différents modes de réalisation visibles sur les figures 2, 9 et 10, un dispositif de distillation comprend une chaudière 40 configurée pour contenir un liquide à distiller 42, au moins un système de chauffe 44 configuré pour chauffer le liquide à distiller 42, un chapiteau 46 surmontant la chaudière 40, un col de cygne 48 configuré pour collecter les vapeurs d'alcool sortant du chapiteau 46 et les acheminer vers un serpentin 50 positionné dans un système réfrigérant 52 contenant un premier fluide caloporteur. Ce type de dispositif de distillation est connu sous le nom d'alambic charentais et sert à produire du cognac.

En fonctionnement, le serpentin 50 comprend un premier tronçon 50.1 au niveau duquel les vapeurs d'alcool se condensent et un deuxième tronçon 50.2 au niveau duquel s'écoulent et sont refroidis les distillats issus de la condensation des vapeurs d'alcool.

La chaudière 40 comprend un fond 54 et un dôme 56 (également appelé collet) présentant une ouverture 58 permettant de faire communiquer l'intérieur de la chaudière 40 avec l'intérieur du chapiteau 46.

Selon un mode de réalisation, le fond 54 et le dôme 56 ont chacun une forme approximativement en demi-sphère et la chaudière 40 comprend une paroi latérale 60 approximativement cylindrique intercalée entre le fond 54 et le dôme 56 et les reliant. A titre d'exemple, le fond 54 présente un bord supérieur 54.1, approximativement circulaire, positionné dans un plan sensiblement horizontal, qui présente un diamètre compris entre 600 et 2000 mm. Bien entendu, l'invention n'est pas limitée à cette géométrie ou ces dimensions pour la chaudière 40.

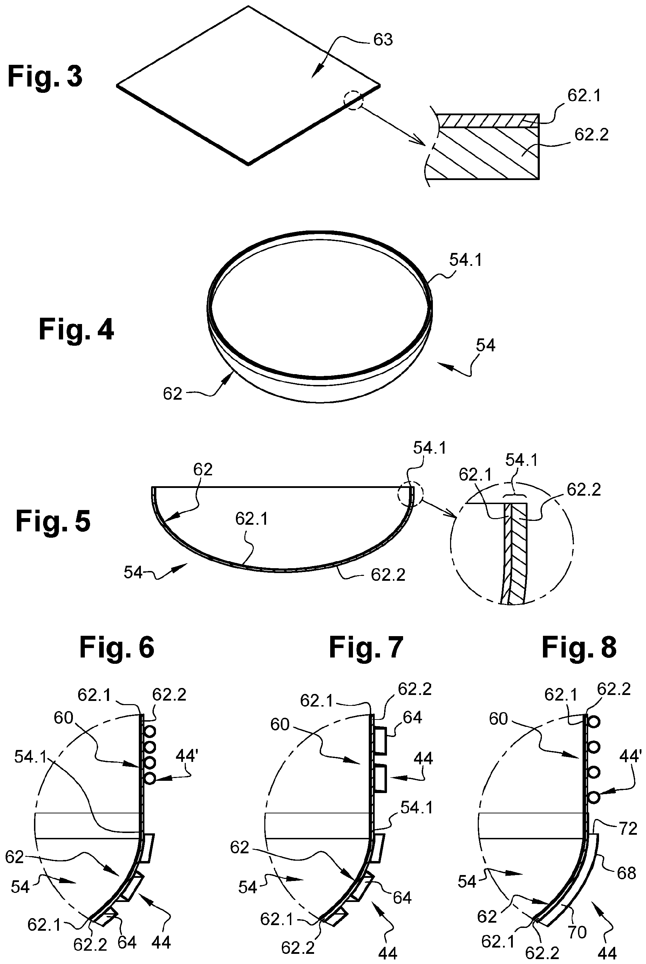

Selon un mode de réalisation visible sur la figure 5, le fond 54 comprend au moins une paroi 62 en contact avec le liquide à distiller 42 en fonctionnement.

La paroi 62 comprend une première couche interne 62.1 en un premier matériau choisi pour ses caractéristiques adaptées à un procédé de distillation et une deuxième couche externe 62.2 en un deuxième matériau, différent du premier matériau, choisi pour ses caractéristiques mécaniques ; les première et deuxième couches 62.1, 62.2 étant intimement liées afin de favoriser les transferts thermiques entre elles, comme illustré sur les figures 3 et 5.

La première couche interne 62.1 est en contact avec le liquide à distiller 42 en fonctionnement.

Selon un mode de réalisation, le premier matériau est un alliage de cuivre ou du cuivre, de préférence avec un niveau de pureté élevé de l'ordre de 99,9%. A titre d'exemple, le premier matériau peut être choisi parmi les nuances de cuivre suivantes : CUB1, CUC1.

Selon un mode de réalisation, le deuxième matériau est un acier inoxydable, de préférence ferromagnétique. A titre d'exemple, le deuxième matériau peut être choisi parmi les nuances suivantes : inox 304, inox 316L, inox 410S.

Selon une configuration, la première couche interne 62.1 a une épaisseur comprise entre 1 et 10 mm, de préférence comprise entre 1 et 6 mm. La deuxième couche externe 62.2 a une épaisseur comprise entre 1 et 20 mm, cette épaisseur variant en fonction du système de chauffe 44.

Selon un mode opératoire, la première couche interne 62.1 est une feuille, tôle ou plaque, réalisée dans le premier matériau, sensiblement plane et la deuxième couche externe 62.2 est une feuille, tôle ou plaque, réalisée dans le deuxième matériau, sensiblement plane.

Selon l'invention, un procédé de fabrication d'une paroi 62 comprend une première étape de placage par explosion sous vide, également appelée « cladding » en anglais, pour obtenir une liaison métallurgique entre les couches interne et externe 62.1, 62.2 qui ne forment plus qu'une unique pièce sous la forme d'une paroi composite métallique 63 sensiblement plane, visible sur la figure 3.

Le fait que les première et deuxième couches 62.1, 62.2 soient initialement planes facilite l'opération de placage par explosion. A l'issue de cette opération, on obtient un contact surfacique homogène sur toute la surface des première et deuxième couches 62.1, 62.2 garantissant un transfert thermique par conduction optimal entre lesdites première et deuxième couches 62.1, 62.2.

Le procédé de fabrication d'une paroi 62 comprend également une étape de mise en forme de la paroi composite métallique 64 afin d'obtenir la paroi 62. Cette étape de mise en forme peut être obtenue par emboutissage à froid ou à chaud selon l'épaisseur de la deuxième couche 62.2 et/ou par toute autre méthode de déformation.

L'opération de placage par explosion sous vide permet d'éviter un délaminage entre les première et deuxième couches 62.1, 62.2 lors de l'étape de mise en forme. Pour éviter tout phénomène de délaminage, la paroi 62 présente généralement une géométrie qui ne comprend pas de rayon de courbure trop réduit.

Selon ce procédé de fabrication, la paroi 62 comprend une face interne en cuivre qui permet d'obtenir les caractéristiques organoleptiques recherchées et certaines interactions chimiques avec le liquide à distiller 42 comme avec les chaudières de l'art antérieur totalement en cuivre. Le fait que la paroi 62 soit en bi-matériau permet, à épaisseur égale, d'obtenir des caractéristiques mécaniques supérieures à une paroi 62 mono-matériau en cuivre. Enfin, l'opération de placage par explosion permet d'obtenir des première et deuxième couches 62.1, 62.2 intimement liées garantissant un transfert thermique optimal entre lesdites première et deuxième couches 62.1, 62.2.

Selon un mode de réalisation, le fond 54 et la paroi latérale 60 comprennent chacun une paroi 62 qui présente une première couche 62.1 en un premier matériau, comme le cuivre par exemple, en contact avec le liquide à distiller 42 en fonctionnement, et une deuxième couche 62.2 en un deuxième matériau, comme en acier inoxydable par exemple.

Selon un autre mode de réalisation, seul le fond 54 comprend une paroi 62 qui présente une première couche 62.1 en un premier matériau, comme le cuivre par exemple, en contact avec le liquide à distiller 42 en fonctionnement, et une deuxième couche 62.2 en un deuxième matériau, comme en acier inoxydable par exemple. Selon un autre mode de réalisation, seule la paroi latérale 60 comprend une paroi 62 qui présente une première couche 62.1 en un premier matériau, comme le cuivre par exemple, en contact avec le liquide à distiller 42 en fonctionnement, et une deuxième couche 62.2 en un deuxième matériau, comme en acier inoxydable par exemple.

Selon un mode de réalisation visible sur la figure 6, le dispositif de distillation comprend plusieurs systèmes de chauffe 44 de différentes natures, comme par exemple un premier système de chauffe 44 utilisant au moins un deuxième fluide caloporteur et un deuxième système de chauffe 44' utilisant au moins un champ magnétique. Selon une configuration, le premier système de chauffe 44 utilisant un deuxième fluide caloporteur est prévu au niveau du fond 54 et le deuxième système de chauffe 44' utilisant au moins un champ magnétique est prévu au niveau de la paroi latérale 60.

Bien entendu, l'invention n'est pas limitée à cet agencement. Ainsi, la chaudière 40 pourrait comprendre d'autres systèmes de chauffe, comme par exemple un brûleur à gaz. Elle pourrait comprendre un unique système de chauffe ou plusieurs systèmes de chauffe de même nature, comme illustré sur la figure 7. Toutefois, le fait de prévoir plusieurs systèmes de chauffe de différentes natures, utilisant des principes physiques différents, permet d'obtenir un mode de fonctionnement optimisé.

Selon un mode de réalisation visible sur les figures 6 et 8, le système de chauffe 44' utilisant au moins champ magnétique comprend au moins un inducteur, comme par exemple une bobine enroulée autour de la chaudière 40, notamment autour de la paroi latérale 60 ou positionnée au niveau du fond 54.

Selon un mode de réalisation visible sur les figures 6 et 7, le système de chauffe 44 utilisant un deuxième fluide caloporteur comprend au moins une canalisation 64 plaquée contre la paroi 62, une alimentation 66.1 pour alimenter en deuxième fluide caloporteur chaud le système de chauffe 44 et une sortie 66.2 pour évacuer le deuxième fluide caloporteur refroidi. Selon une configuration, la canalisation 64 se présente sous la forme d'un échangeur thermique de type serpentin, dans lequel circule le deuxième fluide caloporteur sous pression, plaqué contre la face extérieure de la paroi 62, relié à une première extrémité à une alimentation 66.1 et à une deuxième extrémité à une sortie 66.2.

Selon la figure 8, la chaudière 40 est de type double paroi et comprend une première paroi 62 bi-matériau qui s'étend au niveau du fond 54 et de la paroi latérale 60 ainsi qu'une deuxième paroi 68 espacée de la première paroi 62 de manière à définir une cavité 70 contenant le deuxième fluide caloporteur et présentant au moins une alimentation pour alimenter en deuxième fluide caloporteur chaud le système de chauffe 44 et une sortie pour évacuer le deuxième fluide caloporteur refroidi. Les première et deuxième parois 62, 68 forment une double enveloppe contenant le deuxième fluide caloporteur sous pression.

Selon un mode de réalisation, le fond 54 comprend une deuxième paroi 68 espacée de la première paroi 62 et une paroi périphérique de jonction 72 reliant les première et deuxième parois 62 et 68 de manière étanche. Les première et deuxième parois 62, 68 ainsi que la paroi périphérique de jonction 72 délimitent une cavité 70 dans laquelle circule un deuxième fluide caloporteur, comme par exemple de la vapeur d'eau, de l'eau sous pression, de l'eau surchauffée ou du gaz sous pression.

Le fond 54 peut comprendre des cloisons ou des raidisseurs positionnés dans la cavité 70, reliant les première et deuxième parois 62 et 68 de manière à limiter les risques de déformation desdites parois 62, 68 et/ou de manière à définir un chemin de circulation du deuxième fluide caloporteur entre une alimentation et une sortie de fluide.

La deuxième paroi 68 positionnée à l'extérieur est réalisée en acier inoxydable.

Selon une application, le fluide caloporteur est un fluide sous pression, les première et deuxième parois 62, 68 et leur assemblage étant configurés pour assurer la reprise des efforts liés à une pression supérieure à 3 bars dans la cavité 70, de préférence comprise entre 0 et 20 bars. A titre d'exemple, dans le cas d'une vapeur, la pression sera de l'ordre de 3 bars et dans le cas d'un gaz, elle pourra atteindre 15 bars selon le type de gaz.

Bien entendu, la double paroi n'est pas limitée au fond 54. Ainsi, la paroi latérale 60 pourrait comprendre des première et deuxième parois 62, 68 délimitant une cavité 70 contenant un deuxième fluide caloporteur.

La chaudière 40 peut comprendre un unique système de chauffe 44, plusieurs systèmes de chauffe de même nature, plusieurs systèmes de chauffe de natures différentes, le ou les système(s) de chauffe pouvant être positionné(s) uniquement au niveau du fond 54 ou au niveau du fond 54 et de la paroi latérale 60 ou uniquement au niveau de la paroi latérale 60. Selon un mode de réalisation, la chaudière 40 comprend au moins un isolant thermique configuré pour calorifuger la chaudière 40 afin de limiter les déperditions thermiques. Ainsi, la quantité de chaleur transférée entre chaque système de chauffe 44 et le liquide à distiller 42 est optimisée.

Selon un mode de réalisation, la chaudière 40 comprend une alimentation 74 en liquide à distiller 42 et une vidange 76.

Selon une caractéristique de l'invention, le premier fluide caloporteur du système réfrigérant 52 est utilisé pour chauffer la chaudière 40, comme illustré sur la figure 2.

Le dispositif de distillation comprend au moins un échangeur thermique 78 pour assurer des échanges thermiques entre le premier fluide caloporteur du système réfrigérant 52 et le deuxième fluide caloporteur d'un système de chauffe 44 de la chaudière 40.

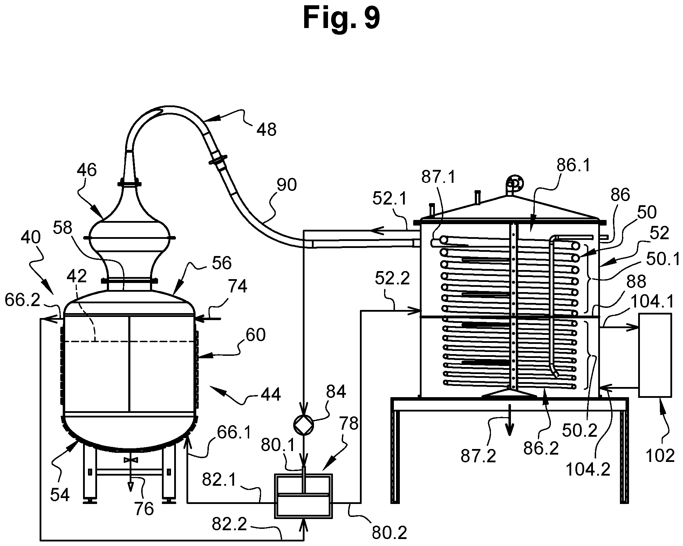

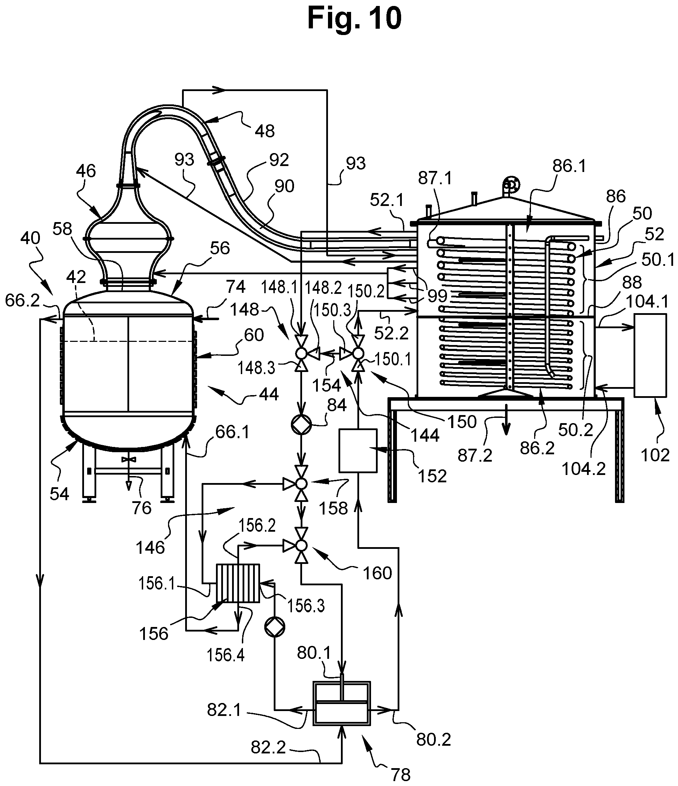

Selon un mode de réalisation visible sur les figures 9 et 10, l'échangeur 78 comprend une pompe à chaleur fonctionnant à très haute température présentant, dans le sens de circulation d'un fluide frigorigène, un évaporateur dans lequel circule le premier fluide caloporteur du système réfrigérant 52, un compresseur qui augmente la pression et la chaleur du fluide frigorigène, un condenseur dans lequel circule le deuxième fluide caloporteur et un détendeur qui diminue la pression.

Le dispositif de distillation comprend :
- un premier circuit isolé thermiquement dans lequel s'écoule le premier fluide caloporteur reliant :
   ∘ une première entrée 80.1 de l'échangeur 78 et une sortie 52.1 du système réfrigérant 52 au niveau de laquelle s'écoule le premier fluide caloporteur à une température comprise entre 85 et 100°C,
   ∘ une première sortie 80.2 de l'échangeur 78 et un retour 52.2 du système réfrigérant 52 au niveau de laquelle s'écoule le premier fluide caloporteur à une température comprise entre 70 et 85°C,
- un deuxième circuit isolé thermiquement dans lequel s'écoule le deuxième fluide caloporteur reliant :
   ∘ une deuxième sortie 82.1 de l'échangeur 78 et une alimentation 66.1 du système de chauffe 44 au niveau de laquelle s'écoule le deuxième fluide caloporteur à une température comprise entre 110°C et 150°C,
   ∘ une deuxième entrée 82.2 de l'échangeur 78 et une sortie 66.2 du système de chauffe 44 au niveau de laquelle s'écoule le deuxième fluide caloporteur à une température comprise entre 90 et 130°C.

Selon un mode de réalisation, les premier et deuxième fluides caloporteurs sont de l'eau. La pompe à chaleur à très haute température a un coefficient de performance supérieur à 3. Le premier circuit et/ou le deuxième circuit comprend au moins une pompe de circulation 84.

Selon l'invention, la chaleur récupérée lors de la condensation des vapeurs d'alcool et/ou dégagée lors du refroidissement des distillats dans le serpentin 50 est utilisée pour chauffer le liquide à distiller 42 dans la chaudière 40. L'utilisation d'une pompe à chaleur permet d'accroître la quantité de chaleur restituée au système de chauffe 44 par rapport à la quantité de chaleur extraite du système réfrigérant 52.

Selon une configuration, les vapeurs d'alcool et les distillats s'écoulant de haut en bas dans le serpentin 50, la sortie 52.1 est positionnée plus haute que le retour 52.2.

Selon une caractéristique, le système réfrigérant 52 comprend un réservoir 86 fermé, contenant le premier fluide caloporteur, qui présente un premier orifice 87.1 en partie supérieure pour permettre le passage d'un tronçon de conduit du col de cygne 48 relié à une extrémité amont du serpentin 50 et un deuxième orifice 87.2 en partie inférieure traversé par une extrémité aval du serpentin 50.

Ce réservoir 86 comprend une cloison 88 le scindant en une chambre supérieure 86.1 positionnée au-dessus de la cloison 88 et une chambre inférieure 86.2 positionnée au-dessous de la cloison 88, cette dernière étant traversée par le serpentin 50.

Selon un mode de réalisation, au moins la chambre supérieure 86.1 est calorifugée. Selon un autre mode de réalisation tout le réservoir 86 est calorifugé.

Selon une configuration, la cloison 88 est positionnée par rapport au serpentin 50 de sorte que le premier tronçon 50.1 du serpentin 50 au niveau duquel se condensent les vapeurs d'alcool soit positionné au-dessus de la cloison 88 et que le deuxième tronçon 50.2 du serpentin 50 soit positionné au-dessous de la cloison 88.

Selon une configuration, le premier fluide caloporteur utilisé dans l'échangeur 78 est celui présent dans la chambre supérieure 86.1. Ainsi, le réservoir 86 présente une sortie 52.1 du premier fluide caloporteur reliée à l'échangeur thermique 78 débouchant en partie supérieure de la chambre supérieure 86.1 et un retour 52.2 du premier fluide caloporteur relié à l'échangeur thermique 78 débouchant en partie inférieure de la chambre supérieure 86.1.

Le fait de prévoir un réservoir 86 fermé et calorifugé au moins au niveau de la chambre supérieure 86.1 limite les déperditions thermiques et l'évaporation du premier fluide caloporteur, ce qui conduit à optimiser la collecte de la chaleur latente produite lors de la condensation des vapeurs d'alcool et utilisée pour le chauffage de la chaudière 40.

La présence de la cloison 88 permet de scinder le premier fluide caloporteur en deux volumes ; un premier volume, présent dans la chambre supérieure 86.1 et circulant dans le premier circuit, utilisé pour provoquer la condensation des vapeurs d'alcool, pour collecter la chaleur produite par cette condensation et la transférer jusqu'à l'échangeur 78 ainsi qu'un deuxième volume, présent dans la chambre inférieure 86.2, utilisé pour refroidir le distillat circulant dans le deuxième tronçon du serpentin 50.

Le fait de prévoir une cloison 88 permet d'éviter le brassage du fluide caloporteur dans la chambre inférieure 86.2 en raison du retour 52.2 du premier fluide caloporteur dans la chambre supérieure 86.1.

Comme pour l'art antérieur, le col de cygne 48 comprend un conduit 90, pour canaliser les vapeurs d'alcool, qui s'étend du chapiteau 46 jusqu'au serpentin 50 et qui traverse le réservoir 86. Ce conduit 90 peut traverser un réchauffe vin (non représenté).

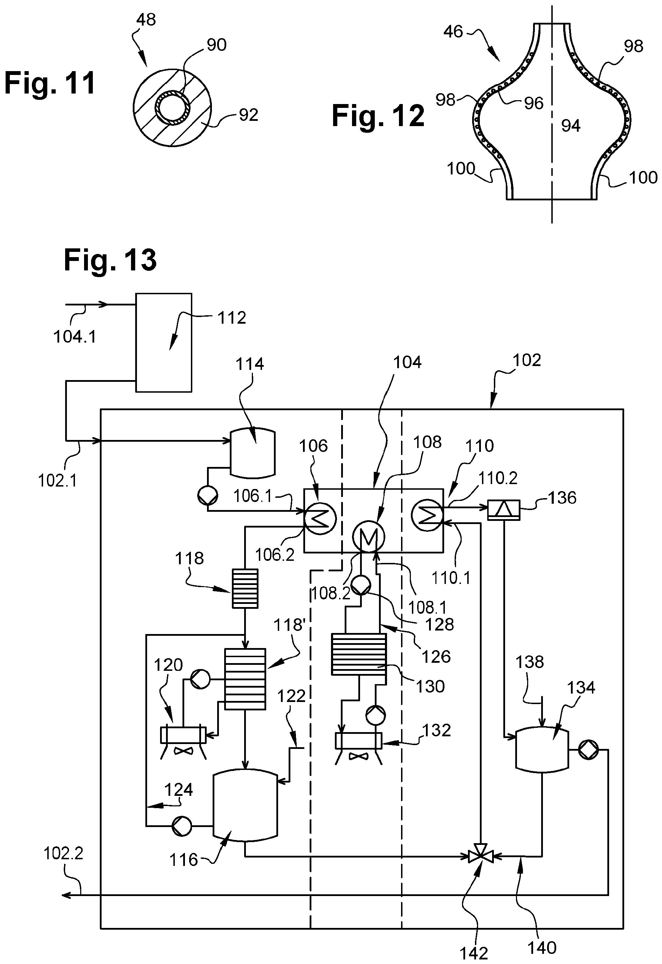

Selon une caractéristique de l'invention visible sur les figures 10 et 11, le col de cygne 48 comprend, en plus du conduit 90, un isolant thermique 92 qui entoure le conduit 90 sur au moins une certaine longueur allant du chapiteau 46 jusqu'au réservoir 86, à l'exception de l'éventuel tronçon du conduit 90 positionné dans le réchauffe vin. Selon la configuration visible sur la figure 10, l'isolant thermique 92 s'étend du chapiteau 46 jusqu'au réservoir 86.

La présence de l'isolant thermique 92 permet de limiter les déperditions thermiques au niveau du col de cygne 48. Ainsi, les déperditions de chaleur qui apparaissaient au niveau du col de cygne 48 dans les dispositifs de l'art antérieur sont transférées dans le réservoir 86 et transmises au premier fluide caloporteur.

Pour certains procédés de distillation, un phénomène de rectification est réalisé dans le col de cygne 48. Dans ce cas, au moins une partie du col de cygne 48, notamment celle proche du chapiteau 46, avant le point haut du col de cygne 48, est thermorégulée et l'isolant thermique 92 est associé à un système de refroidissement 93. Selon une configuration, le système de refroidissement 93 utilise le premier fluide caloporteur qui est prélevé dans la chambre supérieure 86.1 à une hauteur donnée, en fonction de la température souhaitée. Après son utilisation pour le refroidissement de la partie du col de cygne 48 thermorégulée, le premier fluide caloporteur est réinjecté dans la chambre supérieure 86.1 car il a une température supérieure à celle qu'il présentait à son prélèvement. Par conséquent, ce système de refroidissement contribue à apporter des calories dans la chambre supérieure 86.1, comme symbolisé par la flèche 93 sur la figure 10. Un circulateur peut être utilisé pour moduler le temps de contact du premier fluide caloporteur avec la partie du col de cygne 48 thermorégulée.

Enfin, la thermorégulation du col de cygne 48 peut utiliser un autre fluide caloporteur, indépendant du système réfrigérant 52.

Selon un mode de réalisation visible sur la figure 12, le chapiteau 46 comprend au moins une cavité 94 communiquant, en partie inférieure, avec la chaudière 40 et, en partie supérieure, avec le col de cygne 48. Cette cavité 94 est délimitée par une enveloppe 96. La géométrie et les dimensions de l'enveloppe 96 ne sont pas plus décrites car elles varient en fonction des phénomènes de condensation et de reflux recherchés. Elles peuvent être identiques à celles des chapiteaux de l'art antérieur.

Généralement, cette enveloppe 96 est en cuivre ou en alliage de cuivre.

Selon une particularité de l'invention illustrée par la figure 12, le chapiteau 46 est thermorégulé et comprend, en plus de l'enveloppe 96, au moins un système de régulation de la température de l'enveloppe 96. Selon un mode de réalisation, le chapiteau 46 comprend au moins un système de refroidissement 98 de l'enveloppe 96. Selon une configuration, chaque système de refroidissement 98 est plaqué contre l'enveloppe 96, l'ensemble étant recouvert d'un isolant thermique 100 pour limiter les déperditions thermiques.

A titre d'exemple, le chapiteau 46 peut comprendre au moins un système de refroidissement 98 configuré pour refroidir au moins une zone de l'enveloppe 96.

Le fait que le chapiteau 46 soit thermorégulé permet de mieux contrôler les phénomènes de condensation et/ou de reflux à l'intérieur du chapiteau 46.

Selon un mode de réalisation, le chapiteau 46 comprend au moins un système de refroidissement 98 utilisant un fluide caloporteur. Le premier fluide caloporteur présent dans le système réfrigérant 52 peut être utilisé pour réguler la température de l'enceinte 96 du chapiteau 46.

Selon une autre particularité, le dôme 56 est thermorégulé afin de mieux maîtriser les phénomènes de condensation et/ou de reflux, de la même manière que le chapiteau 46.

Quelle que soit la zone thermorégulée, le réservoir 86 peut présenter plusieurs piquages 99 à différentes hauteurs de la chambre supérieure 86.1 pour prélever le premier fluide caloporteur à différentes températures.

Ainsi, selon une caractéristique de l'invention, le chapiteau 46 et/ou au moins une partie du col de cygne 48 et/ou le dôme 56 de la chaudière 40 sont calorifugés et/ou thermorégulés.

Comme illustré sur la figure 2, le dispositif de distillation comprend un système de refroidissement 102 pour refroidir le premier fluide caloporteur du système réfrigérant 52. Ce système de refroidissement 102 comprend une entrée 102.1, reliée à une sortie 104.1 du système réfrigérant 52, et une sortie 102.2 reliée à un retour 104.2 du système de réfrigérant 52.

Lorsque le système réfrigérant 52 comprend un réservoir 86 équipé d'une cloison 88, le premier fluide caloporteur refroidi par le système de refroidissement 102 est présent dans la chambre inférieure 86.2 du réservoir. Selon cette configuration, le retour 104.2 et la sortie 104.1 du système réfrigérant 52 débouchent respectivement en partie inférieure et en partie supérieur de la chambre inférieure 86.2.

Selon une particularité de l'invention, le système de refroidissement 102 utilise un refroidissement par adsorption. Cette solution permet de réduire la quantité d'énergie nécessaire pour refroidir le fluide caloporteur du système réfrigérant 52.

Selon un mode de réalisation visible sur la figure 13, le système de refroidissement 102 comprend une machine d'adsorption 104 qui présente des premier, deuxième et troisième étages 106, 108, 110.

Le premier étage 106 comprend une première alimentation 106.1 en fluide caloporteur chaud provenant directement du système réfrigérant 52 ou d'une première cuve de stockage 112 des fluides caloporteurs chauds provenant de plusieurs systèmes réfrigérants 52. Le premier étage 106 peut comprendre une cuve tampon 114 en amont de la première alimentation 106.1. A titre indicatif, le premier fluide caloporteur a une température comprise entre 70°C et 100°C au niveau de la première alimentation 106.1.

Le premier étage 106 comprend également une sortie 106.2 en fluide caloporteur chaud reliée à une deuxième cuve de stockage 116 du fluide caloporteur tiède. Entre la sortie 106.2 et la deuxième cuve de stockage 116, le système de refroidissement 102 comprend au moins un échangeur thermique 118, 118' pour refroidir le fluide caloporteur. Selon une configuration, le système de refroidissement 102 comprend un premier échangeur à plaques 118 relié à une boucle géothermique et/ou un deuxième échangeur à plaques 118' relié à une boucle comportant au moins un aéroréfrigérant 120 ou tout autre source froide. A titre indicatif, le fluide caloporteur tiède stocké dans la deuxième cuve de stockage 116 a une température de l'ordre de 20°C. Selon un mode de réalisation, la deuxième cuve de stockage 116 comprend une alimentation d'appoint 122 en fluide caloporteur. Le premier étage 106 peut comprendre une boucle de maintien en température 124 pour maintenir la température du fluide caloporteur stocké dans la deuxième cuve de stockage 116 inférieure à une température de consigne. La boucle de maintien en température 124 est configurée pour réinjecter le fluide caloporteur stocké dans la deuxième cuve de stockage 116 en amont d'au moins un des échangeurs thermiques 118, 118'.

Le deuxième étage 108 comprend une deuxième alimentation 108.1 et une deuxième sortie 108.2 reliées à une boucle de refroidissement 126 dans laquelle circule un fluide frigorigène, ladite boucle de refroidissement 126 présentant une pompe 128 et un échangeur thermique 130 relié à au moins un aéroréfrigérant 132 ou toute autre source froide.

Le troisième étage 110 comprend une troisième alimentation 110.1 reliée à la deuxième cuve de stockage 116 du fluide caloporteur tiède et une troisième sortie 110.2 reliée directement à au moins un système réfrigérant 52 ou à une troisième cuve de stockage 134 du fluide caloporteur froid reliée à au moins un système réfrigérant 52. A titre indicatif, la température du fluide caloporteur froid stocké dans la troisième cuve de stockage 134 est de l'ordre de 8°C.

Selon un mode de réalisation, le troisième étage 110 comprend un groupe froid 136 traversé par le fluide caloporteur allant de la troisième sortie 110.2 à la troisième cuve de stockage 134.

Selon une configuration, la troisième cuve de stockage 134 comprend une alimentation d'appoint 138 en fluide caloporteur. Le troisième étage 110 peut comprendre une boucle 140 pour maintenir la température du fluide caloporteur stocké dans la troisième cuve de stockage 134 inférieure à une température de consigne. La boucle 140 est configurée pour réinjecter le fluide caloporteur stocké dans la troisième cuve de stockage 134 au niveau d'une vanne trois voies 142 reliant la deuxième cuve de stockage 116 et la troisième alimentation 110.1 du troisième étage 110.

La boucle 140 permet de faire un mélange entre l'eau tiède de la deuxième cuve de stockage 116 et l'eau froide de la troisième cuve de stockage 134 via la vanne 142 pour faire rentrer dans le troisième étage 110 une température maîtrisée aux alentours des 13°C. Le troisième étage 110 va permettre de descendre aux alentours des 8°C et, dans l'éventualité où les 8°C ne sont pas respectés, le groupe froid 136 permet d'y arriver.

Le système de refroidissement 102 n'est pas limité au mode de réalisation visible sur la figure 13. Ainsi, le fluide caloporteur pourrait traverser le deuxième étage 108 entre la sortie du premier étage 106 et la deuxième cuve de stockage 116.

Quel que soit le mode de réalisation, le premier fluide caloporteur, en traversant les premier et troisième étages 106, 110 de la machine d'adsorption 104 et éventuellement son deuxième étage 108, peut être refroidi d'une température chaude de l'ordre de 80°C à une température froide de l'ordre de 8°C.

Selon un mode de réalisation visible sur la figure 10, le dispositif de distillation comprend un système de by-pass 144 du système réfrigérant 52 et une boucle de démarrage 146. Selon une configuration, le système de by-pass 144 comprend une première vanne trois voies 148 qui présente une première entrée 148.1 reliée à la sortie 52.1 du système réfrigérant 52, une deuxième entrée 148.2 et une sortie 148.3 reliée à la pompe 84 ou à la première entrée 80.1 de l'échangeur 78 ainsi qu'une deuxième vanne trois voies 150 qui présente une entrée 150.1 reliée à la première sortie 80.2 de l'échangeur 78 ou à une cuve d'inertie 152, une première sortie 150.2 reliée au retour 52.2 du système réfrigérant 52 et une deuxième sortie 150.3 reliée à la deuxième entrée 148.2 de la première vanne trois voies 148 via un conduit by-pass 154. La boucle de démarrage 146 comprend un deuxième échangeur thermique 156 configuré pour assurer des échanges thermiques entre le premier fluide caloporteur et le deuxième fluide caloporteur ou le gaz sous pression de l'échangeur 78. Le deuxième échangeur thermique 156 présente, pour le premier fluide caloporteur, une première entrée 156.1 reliée à une troisième vanne trois voies 158 intercalée entre la première vanne trois voies 148 et l'échangeur 78 ainsi qu'une première sortie 156.2 reliée à une quatrième vanne trois voies 160 intercalée entre la troisième vanne trois voies 158 et, pour le deuxième fluide caloporteur, une deuxième entrée 156.3 reliée à deuxième sortie 82.1 de l'échangeur 78 ainsi qu'une deuxième sortie 156.4 reliée à l'alimentation 66.1 du système de chauffe 44.

Les première et deuxième vannes trois voies 148, 150 sont configurées pour occuper un premier état dans lequel elles font communiquer le premier échangeur 78 et le système réfrigérant 52 ainsi qu'un deuxième état dans lequel elles court-circuitent le système réfrigérant 52. Les troisième et quatrième vannes trois voies 158, 160 sont configurées pour occuper un premier état dans lequel elles court-circuitent le deuxième échangeur 156 et un deuxième état dans lequel elles permettent au premier fluide caloporteur de traverser le deuxième échangeur 156.

Le principe de fonctionnement du dispositif de distillation est le suivant :
Un liquide à distiller 42 est introduit dans la chaudière 40. Dans un premier temps, ce liquide à distiller 42 est porté à ébullition pour commencer le procédé d'évaporation. Cette montée en température peut être réalisée à l'aide d'un système de chauffe indépendant du premier fluide caloporteur, comme par exemple un système de chauffe 44' utilisant au moins un champ magnétique.

Selon un autre mode opératoire illustré par la figure 10, cette montée en température est obtenue en utilisant le premier fluide caloporteur. Dans ce cas, tant que le liquide à distiller n'est pas porté à ébullition, les première et deuxième vannes trois voies 148, 150 occupent le deuxième état, court-circuitant le système réfrigérant 52, et les troisième et quatrième vannes trois voies 158, 160 occupent le deuxième état permettant au premier fluide caloporteur de traverser le deuxième échangeur 156. Cette configuration permet d'amorcer le chauffage du liquide à distiller 42 contenu dans la chaudière 40 jusqu'à son ébullition.

Lorsque le liquide à distiller 42 est porté à ébullition, les vapeurs d'alcool s'échappant de la chaudière 40 et traversant le chapiteau 46 sont collectées par le col de cygne 48 et acheminées vers le serpentin 50. Dans le serpentin 50, les vapeurs d'alcool se condensent dans le premier tronçon 50.1 du serpentin 50 puis les distillats sont refroidis dans le deuxième tronçon 50.2 du serpentin 50.

La condensation des vapeurs d'alcool génère de la chaleur latente captée par le premier fluide caloporteur contenu dans la chambre supérieure 86.1 du réservoir 86 du système réfrigérant 52 et utilisée pour chauffer la chaudière 40 par l'intermédiaire d'une pompe à chaleur fonctionnant très haute température.

Le refroidissement des distillats génère de la chaleur sensible captée par le premier fluide caloporteur contenu dans la chambre inférieure 86.2 du réservoir 86 du système réfrigérant 52. Le premier fluide caloporteur contenu dans la chambre inférieure 86.2 est refroidi par le système de refroidissement 102 utilisant un refroidissement par adsorption.

Lorsque la température du premier fluide caloporteur atteint un certain seuil permettant le fonctionnement de l'échangeur 78, les première et deuxième vannes trois voies 148, 150 sont basculées dans le premier état de sorte que le système réfrigérant 52 communique avec l'échangeur 78, puis les troisième et quatrième vannes trois voies 158, 160 sont basculées dans le premier état, court-circuitant le deuxième échangeur 156.

Le dispositif de distillation de l'invention permet de récupérer l'énergie, générée par la condensation des vapeurs d'alcool dans le système réfrigérant 52, qui était perdue dans les dispositifs de distillation de l'art antérieur et qui est utilisée pour chauffer la chaudière 40 selon l'invention.

Le dispositif de distillation permet de réduire la quantité de premier fluide caloporteur à refroidir suite au refroidissement des distillats dans le système réfrigérant 52, ce qui permet de réduire la quantité d'énergie nécessaire au refroidissement du premier fluide caloporteur. L'utilisation d'un système de refroidissement utilisant un refroidissement par adsorption permet également de réduire la quantité d'énergie nécessaire pour refroidir le premier fluide caloporteur.

Bien que décrite appliquée à un alambic charentais, l'invention n'est aucunement limitée à ce type d'alambic. Quel que soit le mode de réalisation, le dispositif de distillation comprend une chaudière 40 contenant un liquide à distiller 42, un conduit de collecte configuré pour collecter des vapeurs d'alcool émanant de la chaudière 40, un système réfrigérant 52 contenant un premier fluide caloporteur, un conduit de refroidissement relié au conduit de collecte et immergé dans le premier fluide caloporteur contenu dans le système réfrigérant 52. Selon le mode de réalisation illustré par la figure 2, le conduit de collecte comprend un chapiteau 46 ainsi qu'un col de cygne 48 et le conduit de refroidissement correspond au serpentin 50.

## Revendications

1. Dispositif de distillation comprenant une chaudière (40) configurée pour contenir un liquide à distiller (42), au moins un système de chauffe (44) configuré pour chauffer le liquide à distiller (42) contenu dans la chaudière (40), un conduit de collecte (46, 48) configuré pour collecter des vapeurs d'alcool émanant de la chaudière (40), un système réfrigérant (52) contenant un premier fluide caloporteur, un conduit de refroidissement (50) relié au conduit de collecte (46, 48) et immergé dans le premier fluide caloporteur contenu dans le système réfrigérant (52) ainsi qu'un système de refroidissement (102) configuré pour refroidir le premier fluide caloporteur contenu dans le système réfrigérant (52), **caractérisé en ce que** le dispositif de distillation comprend au moins un système de chauffe (44) utilisant un deuxième fluide caloporteur et au moins un échangeur thermique (78) pour assurer des échanges thermiques entre le premier fluide caloporteur du système réfrigérant (52) et le deuxième fluide caloporteur du système de chauffe (44).

2. Dispositif de distillation selon la revendication 1, **caractérisé en ce que** l'échangeur thermique (78) comprend une pompe à chaleur fonctionnant à très haute température.

3. Dispositif de distillation selon la revendication 1 ou 2, **caractérisé en ce que** le système réfrigérant (52) comprend un réservoir (86) fermé contenant le premier fluide caloporteur.

4. Dispositif de distillation selon la revendication précédente, **caractérisé en ce que** le réservoir (86) comprend une cloison (88) le scindant en une chambre supérieure (86.1) positionnée au-dessus de la cloison (88) et une chambre inférieure (86.2) positionnée au-dessous de la cloison (88), ladite cloison (88) étant traversée par le conduit de refroidissement (50).

5. Dispositif de distillation selon la revendication précédente, **caractérisé en ce que** la cloison (88) est positionnée par rapport au conduit de refroidissement (50) de sorte qu'un premier tronçon (50.1) du conduit de refroidissement (50) au niveau duquel se condensent les vapeurs d'alcool soit positionné au-dessus de la cloison (88) et qu'un deuxième tronçon (50.2) du conduit de refroidissement (50) au niveau duquel des distillats sont refroidis soit positionné au-dessous de la cloison (88).

6. Dispositif de distillation selon la revendication précédente, **caractérisé en ce que** le réservoir (86) comprend une sortie (52.1) du premier fluide caloporteur reliée à l'échangeur thermique (78) débouchant en partie supérieure de la chambre supérieure (86.1) ainsi qu'un retour (52.2) du premier fluide caloporteur relié à l'échangeur thermique (78) débouchant en partie inférieure de la chambre supérieure (86.1).

7. Dispositif de distillation selon la revendication précédente, **caractérisé en ce que** le réservoir (86) comprend une sortie (104.1) reliée au système de refroidissement (102) débouchant en partie supérieure de la chambre inférieure (86.2) et un retour (104.2) relié au système de refroidissement (102) débouchant en partie inférieure de la chambre inférieure (86.2).

8. Dispositif de distillation selon l'une des revendications 4 à 7, **caractérisé en ce que** le réservoir (86) est calorifugé au moins au niveau de la chambre supérieure (86.1).

9. Dispositif de distillation selon l'une des revendications précédentes, **caractérisé en ce que** le conduit de collecte comprend un chapiteau (46) surmontant la chaudière (40) ainsi qu'un col de cygne (48) reliant le chapiteau (46) et le conduit de refroidissement (50), le chapiteau (46) et/ou le col de cygne (48) et/ou une partie supérieure de la chaudière (40) étant calorifugés.

10. Dispositif de distillation selon la revendication précédente, **caractérisé en ce que** le chapiteau (46) et/ou la partie supérieure de la chaudière (40) et/ou le col de cygne (48) sont thermorégulés.

11. Dispositif de distillation selon l'une des revendications précédentes, **caractérisé en ce que** le dispositif de distillation comprend des systèmes de chauffe (44) de différentes natures.

12. Dispositif de distillation selon la revendication précédente, **caractérisé en ce que** le dispositif de distillation comprend un premier système de chauffe (44) utilisant au moins le deuxième fluide caloporteur et un deuxième système de chauffe (44') utilisant au moins un champ magnétique.

13. Dispositif de distillation selon l'une des revendications précédentes, **caractérisé en ce que** le système de refroidissement (102) comprend une machine d'adsorption (104) présentant des premier, deuxième et troisième étages (106, 108, 110), le premier étage (106) comprenant une première alimentation (106.1) en fluide caloporteur chaud provenant du système réfrigérant (52), le troisième étage (110) comprenant une troisième sortie (110.2) reliée au système réfrigérant (52).

14. Dispositif de distillation selon la revendication précédente, **caractérisé en ce que** le premier étage (106) comprend une sortie (106.2) en fluide caloporteur chaud reliée à une cuve de stockage (116) du fluide caloporteur tiède, **en ce qu'**entre la sortie (106.2) et la cuve de stockage (116) du premier étage (106), le système de refroidissement (102) comprend au moins un échangeur thermique (118, 118') pour refroidir le fluide caloporteur et **en ce que** le premier étage (106) comprend une sortie (106.2) en fluide caloporteur chaud reliée à une cuve de stockage (116) du fluide caloporteur tiède ainsi qu'une boucle de maintien en température (124) pour maintenir la température du fluide caloporteur stocké dans la cuve de stockage (116) inférieure à une température de consigne, la boucle de maintien en température (124) étant configurée pour réinjecter le fluide caloporteur stocké dans la cuve de stockage (116) en amont de l'échangeur thermique (118, 118').

15. Dispositif de distillation selon l'une des revendications 13 à 14, **caractérisé en ce que** le deuxième étage (108) comprend une deuxième alimentation (108.1) et une deuxième sortie (108.2) reliées à une boucle de refroidissement (126) dans laquelle circule un fluide frigorigène.
